# EUROPEAN PATENT APPLICATION

(11) **EP 3 428 463 A1**
(43) Date of publication of application: **16.01.2019**
(21) Application number: 17763012.6
(22) Date of filing: 28.02.2017
(51) Int. Cl.: F16C 11/06, F16J 3/04, F16J 15/52

(54) **DUST COVER AND SEALING STRUCTURE**

(30) Priority: 10.03.2016 JP 2016046604
(71) Applicant: NOK Corporation, Tokyo 105-8585 (JP)
(72) Inventor: KANAGAWA, Koji, Makinohara-shi Shizuoka 421-0532 (JP)
(74) Representative: TBK
(86) International application number: PCT/JP2017/007828
(87) International publication number: WO 2017/154672

(57) **Abstract**

A dust cover and a sealing structure with which a sealing performance is improved while limiting an increase in a number of components. A seal portion 120 includes an inner peripheral seal portion having a plurality of annular projecting portions configured to slide on an outer peripheral surface of a shaft 310, and a dust seal portion configured to slide on an end face of a knuckle 400. A third projecting portion 121c, which is one of the projecting portions, located furthest toward a first end side, and configured to project toward the first end side, is formed by an annular recessed part 123, which is recessed from an end face of the seal portion on the first end side 120a toward a second end side, and a part of an inner peripheral surface of the seal portion 120, and an inner peripheral surface of the third projecting portion 121c is in close contact with a collar 311 and configured to slide along an outer peripheral surface thereof.

## Description

### [Technical Field]

The present invention relates to a dust cover and a sealing structure used in a ball joint provided in various devices, such as a vehicle.

### [Background Art]

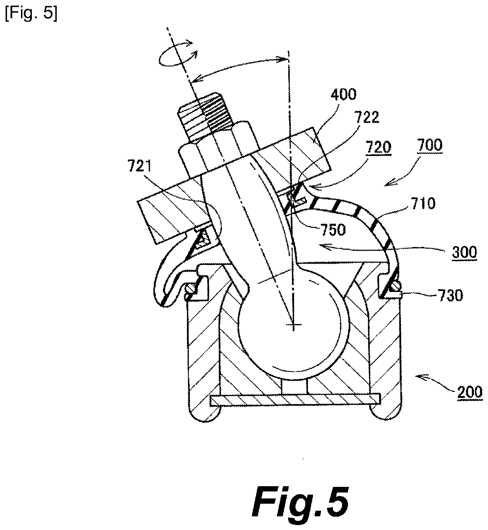

A dust cover is used conventionally in a ball joint provided in various devices, such as a vehicle, to prevent water, dust, and so on from entering a joint portion and grease from flowing out of the joint portion. Referring to Fig. 5, a dust cover used in a ball joint according to a conventional example will be described. Fig. 5 is a schematic sectional view of a ball joint and a dust cover attached to the ball joint according to a conventional example.

The ball joint includes a ball stud 300 having a shaft, a spherical part on one end of the shaft, a socket 200 that supports the ball stud 300 allowing it to rotate and swing, and a knuckle 400 joined to the shaft of the ball stud 300. A dust cover 700 includes a seal main body that is made of elastic material in which a deformable, film-form trunk portion 710, a fixed portion 730 provided on a first end side of the trunk portion 710 and fixed to the socket 200, and a seal portion 720 provided on a second end side of the trunk portion 710 are formed integrally. The seal portion 720 includes an inner peripheral seal portion 721 configured to slide along the shaft of the ball stud 300, and a dust seal portion 722 configured to slide on the knuckle 400.

Further, a reinforcing ring 750 is embedded in the seal portion 720. By embedding the reinforcing ring 750 in the seal portion 720 in this manner, a sealing performance achieved by the inner peripheral seal portion 721 and the dust seal portion 722 can be improved.

In a state where the ball stud 300 is tilted in a leftward direction as illustratively shown in Fig. 5, a part of the trunk portion 710 on the left side of the figure is compressed and a part thereof on the right side of the figure is extended. Accordingly, in the part on the right side of the figure, force drawing the inner peripheral seal portion 721 apart from the shaft of the ball stud 300 acts on the inner peripheral seal portion 721, and force drawing the dust seal portion 722 apart from the knuckle 400 acts on the dust seal portion 722. By embedding the reinforcing ring 750 in the seal portion 720, as described above, separation of the inner peripheral seal portion 721 from the shaft is suppressed, and separation of the dust seal portion 722 from the knuckle 400 is suppressed.

In a low-temperature environment, however, the inner peripheral seal portion 721 and the dust seal portion 722, which are both made of rubber, rapidly lose elasticity. Gaps may form respectively between the inner peripheral seal portion 721 and the shaft of the ball stud 300 and between the dust seal portion 722 and the knuckle 400 due to permanent distortion caused by compression deformation at a low temperature, and as a result, a sealing function may deteriorate.

In a conventional technique for solving this problem (see PTL 1 and 2), the dust cover is supported by attaching a retainer to the shaft of the ball stud. In this case, however, the number of components increases due to the need to provide the retainer, leading to a corresponding increase in cost. Since the dust cover is supported by the retainer, excessive pressure may be applied to the seal portion of the dust cover, leading to a reduction in sliding performance. When the sliding performance deteriorates, the film-form trunk portion of the dust cover twists as the ball stud rotates, leading to a reduction in the durability of the trunk portion.

### [Citation List]

### [Patent Literature]

[PTL 1]
   Japanese Patent Application Publication No. 2015-7444
[PTL 2]
   Japanese Utility Model Application Publication No. H03-123161

### [Summary of Invention]

### [Technical Problem]

An object of the present invention is to provide a dust cover and a sealing structure with which a sealing performance is improved while an increase in a number of components is limited.

### [Solution to Problem]

The present invention employs following means to solve the problem described above.

A dust cover according to the present invention configured to be used in a ball joint,
the ball joint including:
a ball stud having a shaft with a collar and a spherical part on one end of the shaft;
a socket having a bearing for the spherical part and supporting the ball stud configured to rotate and swing; and
a joint member joined to the shaft on an opposite side to the spherical part with respect to the collar,
the dust cover including:
a seal main body made of elastic material having:
   a deformable trunk portion;
   a fixed portion provided on a first end side of the trunk portion and fixed to the socket; and
   a seal portion provided on a second end side of the trunk portion and configured to slide on both the shaft and the joint member; and
a reinforcing ring provided in the seal portion,
wherein the seal portion includes:
an inner peripheral seal portion having a plurality of annular projecting portions configured to slide on an outer peripheral surface of the shaft; and
a dust seal portion configured to slide on an end face of the joint member,
wherein a first projecting portion, which is one of the projecting portions, located furthest toward the first end side, and configured to project toward the first end side, is formed by:
an annular recessed part, which is recessed from an end face of the seal portion on the first end side toward the second end side; and
a part of an inner peripheral surface of the seal portion, and
an inner peripheral surface of the first projecting portion is in close contact with the collar and configured to slide along an outer peripheral surface thereof.

A sealing structure according to the present invention includes a ball joint and a dust cover used in the ball joint,
the ball joint including:
a ball stud having a shaft with a collar and a spherical part on one end of the shaft;
a socket having a bearing for the spherical part and supporting the ball stud configured to rotate and swing; and
a joint member joined to the shaft on an opposite side to the spherical part with respect to the collar; and
the dust cover including:
a seal main body made of elastic material having:
   a deformable trunk portion;
   a fixed portion provided on a first end side of the trunk portion and fixed to the socket; and
   a seal portion provided on a second end side of the trunk portion and configured to slide on both the shaft and the joint member; and
a reinforcing ring provided in the seal portion,
wherein the seal portion includes:
an inner peripheral seal portion having a plurality of annular projecting portions configured slide on an outer peripheral surface of the shaft; and
a dust seal portion configured to slide on an end face of the joint member,
wherein a first projecting portion, which is one of the projecting portions, located furthest toward the first end side, and configured to project toward the first end side, is formed by:
an annular recessed part, which is recessed from an end face of the seal portion on the first end side toward the second end side; and
a part of an inner peripheral surface of the seal portion, and
an inner peripheral surface of the first projecting portion is in close contact with the collar and configured to slide along an outer peripheral surface thereof.

According to these inventions, the inner peripheral surface of the first projecting portion, which is formed to project toward the first end side, is in close contact with the collar provided on the shaft of the ball stud and configured to slide along the outer peripheral surface the collar. The attitude of the seal portion relative to the ball stud and the joint member can be maintained with stability regardless of the attitude of the ball stud relative to the socket. As a result, the seal portion exhibits a stable sealing performance regardless of the attitude of the ball stud relative to the socket. The first projecting portion is formed by the annular recessed part, which is recessed from the end face of the seal portion on the first end side toward the second end side, and a part of the inner peripheral surface of the seal portion. When the first projecting portion is pushed by the collar, the first projecting portion can deflect toward the annular recessed part side. As a result, an excessively large compression force can be prevented from acting on the first projecting portion.

An end face of the reinforcing ring on the first end side is preferably positioned on the second end side relative to the first projecting portion.

This enables abnormal deformation of the first projecting portion when a compression force acts on the first projecting portion to be suppressed even more effectively.

Preferably, the inner peripheral surface of the first projecting portion is constituted by an inclined surface that increases in diameter toward the first end side, and an outer peripheral surface of the first projecting portion is constituted by an inclined surface that decreases in diameter toward the first end side.

This enables an appropriate force to be exerted on the first projecting portion from the collar toward a radial direction outer side and the second end side. As a result, the force by which the dust seal portion is in close contact with the joint member can be maintained at an appropriate level.

The respective configurations described above may be employed in all possible combinations.

### [Advantageous Effects of Invention]

According to the present invention, as described above, the sealing performance can be improved while an increase in the number of components is limited.

### [Brief Description of Drawings]

Fig. 1 is a schematic sectional view of a ball joint and a dust cover attached to the ball joint according to an embodiment of the present invention.
Fig. 2 is a schematic sectional view of the dust cover according to this embodiment of the present invention.
Fig. 3 is an enlarged schematic sectional view showing the vicinity of a seal portion of the dust cover according to this embodiment of the present invention.
Fig. 4 is an enlarged schematic sectional view showing the vicinity of the seal portion of the dust cover according to this embodiment of the present invention in a state where the dust cover is attached to the ball joint.
Fig. 5 is a schematic sectional view of a ball joint and a dust cover attached to the ball joint according to a conventional example.

### [Description of Embodiment]

An exemplary embodiment of the present invention will be described in detail below with reference to the figures. Note, however, that unless specifically stated otherwise below, the scope of the present invention is not limited to the dimensions, materials, shapes, relative arrangements, and so on of constituent components described in the embodiment.

### (Embodiment)

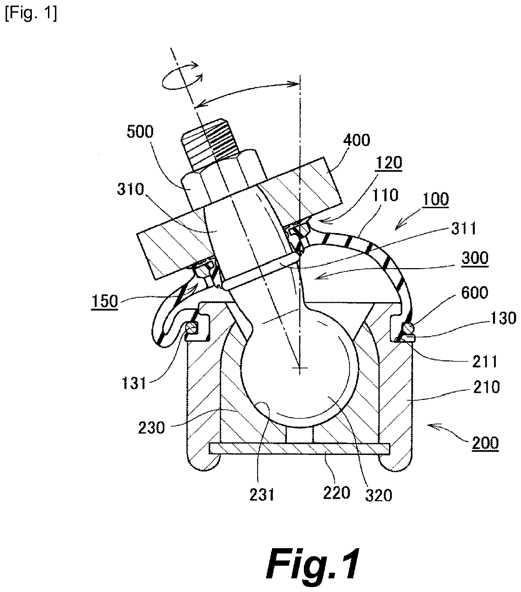

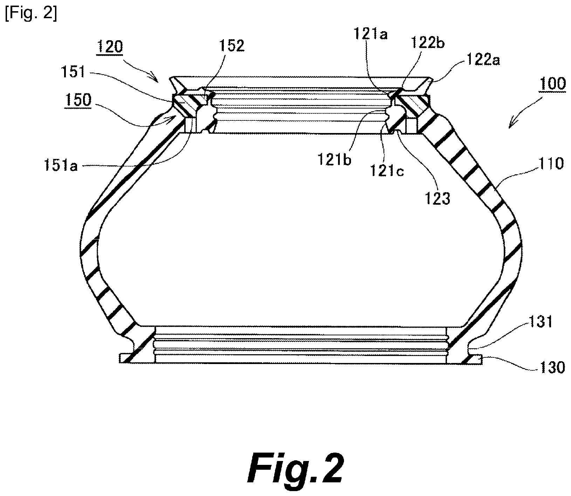

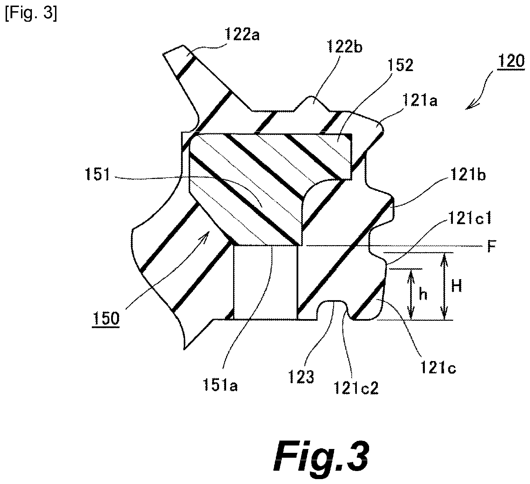

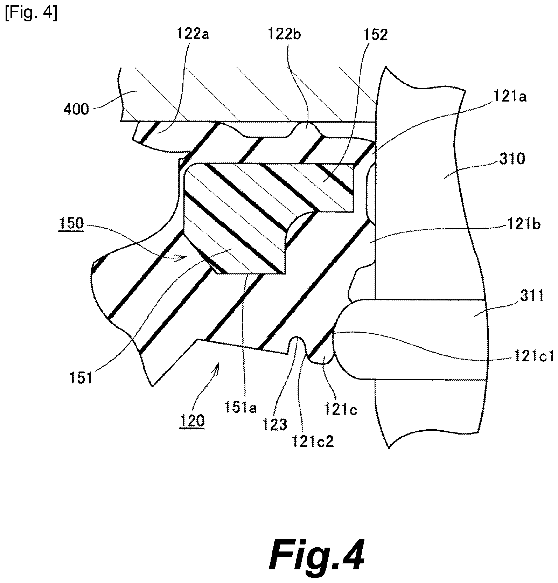

Referring to Figs. 1 to 4, a dust cover and a sealing structure according to an embodiment of the present invention will be described. Fig. 1 is a schematic sectional view of a ball joint and a dust cover attached to the ball joint according to this embodiment of the present invention. Note that Fig. 1 shows a cross-section obtained by cutting the ball joint and dust cover on a plane that includes a central axis of a shaft of a ball stud included in the ball joint. Fig. 2 is a schematic sectional view of the dust cover according to this embodiment of the present invention. Note that Fig. 2 shows a cross-section obtained by cutting the dust cover on a plane that includes a central axis of the annular dust cover in a state where the dust cover is not deformed. Fig. 3 is a partially enlarged view of Fig. 2, and an enlarged schematic sectional view showing the vicinity of a seal portion of the dust cover according to this embodiment of the present invention. Fig. 4 is a partially enlarged view of Fig. 1 and an enlarged schematic sectional view showing the vicinity of the seal portion of the dust cover according to this embodiment of the present invention in a state where the dust cover is attached to the ball joint.

### <Ball Joint>

Referring to Fig. 1 in particular, an example of a ball joint to which the dust cover according to this embodiment can be applied will be described. The ball joint includes a ball stud 300, a socket 200 that supports the ball stud 300 in a manner to allow the ball stud 300 to rotate and swing, and a knuckle 400 as a joint member that is joined to a shaft 310 of the ball stud 300.

The ball stud 300 includes a spherical part 320 on one end of the shaft 310, the shaft 310 having a collar 311. The socket 200 includes an annular case 210, a bottom plate 220 fixed to a bottom side of the case 210, and a bearing 230 for the spherical part 320. The bearing 230 has a bearing surface 231 constituted by a spherical surface having an equal radius to a curvature radius of the spherical part 320. The knuckle 400 is joined to the shaft 310 on an opposite side to the spherical part 320 with respect to the collar 311. The knuckle 400 is joined to the shaft 310 by a nut 500.

A dust cover 100 is used to prevent water, dust, and so on from entering the joint portion and grease from flowing out of the joint portion.

### <Dust Cover>

An overall configuration of the dust cover 100 will now be described with reference to Fig. 2 in particular. The dust cover 100 is constituted by a seal main body formed by an elastic body made of rubber (chloroprene rubber, for example) or the like, and a resin reinforcing ring 150 made of PTFE, nylon, polyamide, or the like. In this embodiment, the dust cover 100 can be obtained by molding the resin reinforcing ring 150, and then vulcanizing the seal main body by coating the reinforcing ring 150 with an adhesive, setting the reinforcing ring 150 in a die, and injecting a rubber material into the die. Note that metal may also be used as the material of the reinforcing ring 150.

The seal main body is obtained by integrating a deformable, annular, film-form trunk portion 110, a fixed portion 130 provided on a first end side of the trunk portion 110 and fixed to the socket 200, and a seal portion 120 provided on a second end side of the trunk portion 110. Hereafter, the side of the trunk portion 110 on which the fixed portion 130 is provided (a lower side in Figs. 2, 3, and 4) will be referred to as the "first end side", and the side on which the seal portion 120 is provided (an upper side in Figs. 2, 3, and 4) will be referred to as the "second end side".

The fixed portion 130 is provided with an annular recessed part 131. The fixed portion 130 is configured to be fixed to the case 210 of the socket 200 by fitting a clamp 600 into the annular recessed part 131. The reinforcing ring 150 is provided in the interior of the seal portion 120. In the dust cover 100 thus configured, when the ball stud 300 swings relative to the socket 200, the trunk portion 110 deforms (see Fig. 1). When the ball stud 300 rotates relative to the socket 200, the seal portion 120 slides relative to both the shaft 310 of the ball stud 300 and the knuckle 400. With the sealing structure having the configuration described above, the dust cover 100 performs a sealing function even when the ball stud 300 swings and rotates relative to the socket 200.

### <Seal Portion and Reinforcing Ring>

The seal portion 120 and the reinforcing ring 150 according to this embodiment will now be described in further detail using Figs. 3 and 4 in particular.

The seal portion 120 includes an inner peripheral seal portion having a plurality of annular projecting portions that are configured to slide on an outer peripheral surface of the shaft 310 of the ball stud 300, and a dust seal portion that is configured to slide on an end face of the knuckle 400. For clarity, the projecting portions have been named a first projecting portion 121a, a second projecting portion 121b, and a third projecting portion 121c in order from the second end side toward the first end side. Note that the "first projecting portion" as claimed, which is one of the projecting portions, located furthest toward the first end side, corresponds to the third projecting portion 121c in this embodiment.

The first projecting portion 121a and the second projecting portion 121b are both constituted by annular projecting portions that project radially inwardly. The first projecting portion 121a and the second projecting portion 121b are in close contact with a main body part (a part excluding the collar 311) of the shaft 310 and configured to slide on an outer peripheral surface thereof (see Fig. 4). An inner diameter of a radially inward distal end part of the first projecting portion 121a is designed to be larger than an inner diameter of a radially inward distal end part of the second projecting portion 121b.

The third projecting portion 121c configured to project toward the first end side is formed by an annular recessed part 123, which is recessed from an end face of the seal portion 120 on the first end side toward the second end side, and a part of an inner peripheral surface of the seal portion 120. An inner peripheral surface 121c1 of the third projecting portion 121c is in close contact with the collar 311 and configured to slide along an outer peripheral surface thereof (see Fig. 4). The inner peripheral surface 121c1 of the third projecting portion 121c is constituted by an inclined surface that increases in diameter toward the first end side, while an outer peripheral surface 121c2 of the third projecting portion 121c is constituted by an inclined surface that decreases in diameter toward the first end side. In this embodiment, the inner peripheral surface 121c1 and the outer peripheral surface 121c2 are both constituted mainly by tapered surfaces.

The dust seal portion according to this embodiment includes a dust lip 122a provided on a radially outward side, and an annular projecting portion 122b provided on a radially inward side. The dust lip 122a is configured to extend radially outward toward a surface of the knuckle 400.

The reinforcing ring 150 includes a cylindrical portion 151 and an inward flange portion 152 provided on the second end side of the cylindrical portion 151. A tip end of the inward flange portion 152 of the reinforcing ring 150 is positioned, in an axial direction, between the radially inward distal end part of the first projecting portion 121a and the radially inward distal end part of the second projecting portion 121b of the seal portion 120. An end face 151a of the reinforcing ring 150 on the first end side is positioned on the second end side relative to the third projecting portion 121c. The reference sign F in Fig. 3 denotes the position of the end face 151a of the reinforcing ring 150 on the first end side. The reference sign H in the figure denotes a height of the third projecting portion 121c. The height H of the third projecting portion 121c according to this embodiment is set to be no less than 1 mm. A distance from the end face of the seal portion 120 on the first end side to the end face 151a of the reinforcing ring 150 on the first end side is set to be no less than the height H of the third projecting portion 121c. An allowable compression amount of the third projecting portion 121c (corresponding to a region h (see Fig. 3) that is compressed by the outer peripheral surface of the collar 311) is set to be no greater than the height H of the third projecting portion 121c. Thus, an excessive compression force can be prevented from acting on the third projecting portion 121c, and as a result, abnormal deformation of the third projecting portion 121c can be suppressed.

### <Advantages of Dust Cover and Sealing Structure According to This Embodiment

In the dust cover 100 and the sealing structure according to this embodiment, the third projecting portion 121c configured to project toward the first end side is provided on the inner peripheral seal portion of the seal portion 120 of the dust cover 100, and the inner peripheral surface 121c1 of the third projecting portion 121c is in close contact with the collar 311 provided on the shaft 310 of the ball stud 300 so as to slide along the outer peripheral surface thereof. Hence, the first end side and inner peripheral surface side of the seal portion 120 are supported by the collar 311. Accordingly, the attitude of the seal portion 120 relative to the ball stud 300 and the knuckle 400 can be maintained with stability regardless of the attitude of the ball stud 300 relative to the socket 200. As a result, the seal portion 120 exhibits a stable sealing performance regardless of the attitude of the ball stud 300 relative to the socket 200.

The third projecting portion 121c is formed by the annular recessed part 123, which is recessed from the end face of the seal portion 120 on the first end side toward the second end side, and a part of the inner peripheral surface of the seal portion 120. Therefore, even when the third projecting portion 121c is pressed in by the collar 311, the third projecting portion 121c can deflect toward the annular recessed part 123. Hence, an excessively large compression force can be prevented from acting on the third projecting portion 121c. As a result, abnormal deformation of the third projecting portion 121c can be suppressed, and a large force can be prevented from acting on the dust seal portion when the third projecting portion 121c is compressed.

In this embodiment, the end face 151a of the reinforcing ring 150 on the first end side is positioned on the second end side relative to the third projecting portion 121c. As a result, abnormal deformation of the third projecting portion 121c when a compression force acts on the third projecting portion 121c can be suppressed even more effectively.

In this embodiment, the inner peripheral surface 121c1 of the third projecting portion 121c is constituted by an inclined surface that increases in diameter toward the first end side, while the outer peripheral surface 121c2 of the third projecting portion 121c is constituted by an inclined surface that decreases in diameter toward the first end side. Thus, an appropriate force can be exerted on the third projecting portion 121c from the collar 311 radially outward and toward the second end side. As a result, a force by which the dust seal portion (more specifically, the dust lip 122a) is in close contact with the knuckle 400 can be maintained at an appropriate level. Even when a large force is exerted on the dust seal portion from the knuckle 400, the third projecting portion 121c can move so as to slide over the collar 311, and therefore the third projecting portion 121c can be prevented from being crushed.

### [Reference Signs List]

- 100: Dust cover
- 110: Trunk portion
- 120: Seal portion
- 121a: First projecting portion
- 121b: Second projecting portion
- 121c: Third projecting portion
- 121c1: Inner peripheral surface
- 121c2: Outer peripheral surface
- 122a: Dust lip
- 122b: Annular projecting portion
- 123: Annular recessed portion
- 130: Fixed portion
- 131: Annular recessed portion
- 150: Reinforcing ring
- 151: Cylindrical portion
- 151a: End face
- 152: Inward flange portion
- 200: Socket
- 210: Case
- 220: Bottom plate
- 230: Bearing
- 231: Bearing surface
- 300: Ball stud
- 310: Shaft
- 311: Collar
- 320: Spherical portion
- 400: Knuckle
- 500: Nut
- 600: Clamp

## Claims

1. A dust cover configured to be used in a ball joint,
the ball joint including:
a ball stud having a shaft with a collar and a spherical part on one end of the shaft;
a socket having a bearing for the spherical part and supporting the ball stud configured to rotate and swing, and
a joint member joined to the shaft on an opposite side to the spherical part with respect to the collar,
the dust cover comprising:
a seal main body made of elastic material having:
a deformable trunk portion;
a fixed portion provided on a first end side of the trunk portion and fixed to the socket; and
a seal portion provided on a second end side of the trunk portion and configured to slide on both the shaft and the joint member; and
a reinforcing ring provided in the seal portion,
wherein the seal portion includes:
an inner peripheral seal portion having a plurality of annular projecting portions configured to slide on an outer peripheral surface of the shaft; and
a dust seal portion configured to slide on an end face of the joint member,
wherein a first projecting portion, which is one of the projecting portions, located furthest toward the first end side, and configured to project toward the first end side, is formed by:
an annular recessed part, which is recessed from an end face of the seal portion on the first end side toward the second end side: and
a part of an inner peripheral surface of the seal portion, and
an inner peripheral surface of the first projecting portion is in close contact with the collar and configured to slide along an outer peripheral surface thereof.

2. The dust cover according to claim 1, wherein an end face of the reinforcing ring on the first end side is positioned on the second end side relative to the first projecting portion.

3. The dust cover according to claim 1 or 2, wherein the inner peripheral surface of the first projecting portion is constituted by an inclined surface that increases in diameter toward the first end side, and an outer peripheral surface of the first projecting portion is constituted by an inclined surface that decreases in diameter toward the first end side.

4. A sealing structure comprising a ball joint and a dust cover used in the ball joint,
the ball joint including:
a ball stud having a shaft with a collar and a spherical part on one end of the shaft;
a socket having a bearing for the spherical part and supporting the ball stud configured to rotate and swing; and
a joint member joined to the shaft on an opposite side to the spherical part with respect to the collar; and
the dust cover including:
a seal main body made of elastic material having:
a deformable trunk portion;
a fixed portion provided on a first end side of the trunk portion and fixed to the socket; and
a seal portion provided on a second end side of the trunk portion and configured to slide on both the shaft and the joint member; and
a reinforcing ring provided in the seal portion
wherein the seal portion includes:
an inner peripheral seal portion having a plurality of annular projecting portions configured to slide on an outer peripheral surface of the shaft; and
a dust seal portion configured to slide on an end face of the joint member,
wherein a first projecting portion, which is one of the projecting portions, located furthest toward the first end side, and configured to project toward the first end side, is formed by:
an annular recessed part, which is recessed from an end face of the seal portion on the first end side toward the second end side; and
a part of an inner peripheral surface of the seal portion, and
an inner peripheral surface of the first projecting portion is in close contact with the collar and configured to slide along an outer peripheral surface thereof.

5. The sealing structure according to claim 4, wherein an end face of the reinforcing ring on the first end side is positioned on the second end side relative to the first projecting portion.

6. The sealing structure according to claim 4 or 5, wherein the inner peripheral surface of the first projecting portion is constituted by an inclined surface that increases in diameter toward the first end side, and an outer peripheral surface of the first projecting portion is constituted by an inclined surface that decreases in diameter toward the first end side.
